# EUROPÄISCHE PATENTSCHRIFT

(11) **EP 4 326 966 B1**
(45) Veröffentlichungstag und Bekanntmachung des Hinweises auf die Patenterteilung: **19.02.2025**
(21) Anmeldenummer: 22721335.2
(22) Anmeldetag: 07.04.2022
(51) Int. Cl.: E05F 15/632, E05F 15/73

(54) **GEBÄUDE-SCHIEBETÜRSYSTEM MIT KANTENÜBERGREIFENDER ELEKTRONISCHER ANZEIGEEINRICHTUNG**
BUILDING SLIDING DOOR SYSTEM WITH EDGE-OVERLAPPING ELECTRONIC DISPLAY
SYSTÈME DE PORTE COULISSANTE DE BÂTIMENT POURVU D'AGENCEMENT D'AFFICHAGE ÉLECTRONIQUE RECOUVRANT LES BORDS

(30) Priorität: 20.04.2021 EP 21169295
(43) Veröffentlichungstag der Anmeldung: 28.02.2024
(73) Patentinhaber: INVENTIO AG, 6052 Hergiswil (CH)
(72) Erfinder: VONAESCH, Jonas, 6005 Luzern (CH)
(74) Vertreter: Inventio AG
(86) Internationale Anmeldenummer: PCT/EP2022/059235
(87) Internationale Veröffentlichungsnummer: WO 2022/223306

(56) Entgegenhaltungen:
- WO-A1-2006/074785
- WO-A1-2020/182511

## Beschreibung

Die hier beschriebene Erfindung betrifft allgemein die technische Ausrüstung eines Gebäudes. Ausführungsbeispiele der Erfindung betreffen insbesondere die technische Gebäudeausrüstung, um einen Zugang zum Gebäude oder zu einem Gebäudeinnenraum abzutrennen, und ein Verfahren zum Betreiben der technischen Gebäudeausrüstung. Gebäude können auf verschiedenste Art und Weise ausgerüstet sein, um den Zugang zum Gebäude oder innerhalb des Gebäudes den Zugang zu einem Innenraum abzutrennen. In einem Gebäude erfolgt die Abtrennung oft durch Türen. Eine Tür kann als Anschlagtür mit einem beweglichen Türblatt, welches drehbar mit zwei oder mehr Scharnieren (Türbändern) am Türrahmen (Zarge, Türfutter) befestigt ist, ausgeführt sein oder als Falttür, bei der ein oder mehrere Türflügel durch Scharnierbänder oder flexible Streifen in mehrere Teile gegliedert sind, die sich beim Öffnen aus der Schliessebene herausfalten. Es sind auch Schiebetüren bekannt, die mit Laufschienen am Rahmen befestigt, in denen das Türblatt aufgehängt oder eingefügt ist und seitlich verschoben werden kann. EP 2 8166 241 B1 beschreibt beispielsweise eine Schiebetür, die in einer Rahmenstruktur zwischen einer geschlossenen Position und einer geöffneten Position verschiebbar ist. In der geschlossenen Position ist die Schiebtür flächenbündig mit der sie umgebenden Wand, und in der geöffneten Position nimmt eine Aussparung in der Wand die Schiebetür zumindest teilweise auf. WO 2020/182511 A1 und WO 2006/074785 A1 beschreiben Schiebetüren mit einer Anzeigeeinrichtung.

Die genannten Systeme betreffen unterschiedliche Anforderungen an Gebäudetüren und deren diesbezügliche Ausgestaltungen in einem Gebäude. Zusätzlich zu diesen bekannten Anforderungen ergeben sich weitere Anforderungen, beispielsweise aufgrund von sich ändernden Lebensgewohnheiten bzw. Lebensumständen (z. B. verdichtetes Wohnen in Apartments in einer Stadt), einem Bedürfnis nach erhöhter Sicherheit und einer zunehmenden Automatisierung von und in Gebäuden. Es besteht daher ein Bedarf an einer Technologie, die eine weitere Automatisierung des Betriebs einer Gebäudetür ermöglicht.

Ein Aspekt der Erfindung betrifft ein Gebäude-Schiebetürsystem, das einen ersten Gebäudebereich von einem zweiten Gebäudebereich abtrennt. Das Gebäude-Schiebetürsystem umfasst eine Rahmenstruktur, die einen Türrahmenbereich, einen Durchgangsbereich und einen Wandschalenbereich hat. Eine Schiebetür ist in der Rahmenstruktur zwischen einer geschlossenen Position und einer geöffneten Position entlang einer Schiebeachse verschiebbar. Die Schiebetür hat eine Stirnseite und ein Türblatt, wobei der Wandschalenbereich die Schiebetür in der geöffneten Position zumindest teilweise aufnimmt. Die Stirnseite zeigt in Richtung des Durchgangsbereichs und erstreckt sich quer zur Schiebeachse. Das Türblatt erstreckt sich von der Stirnseite ausgehend im Wesentlichen parallel zur Schiebeachse. Eine elektromechanische Antriebseinheit und eine Steuereinrichtung sind ausgestaltet, die Schiebetür zu verschieben. Ausserdem ist eine elektronische Anzeigeeinrichtung vorhanden, die in einem festgelegten Höhenabschnitt an der Schiebetür angeordnet und mit der Steuereinrichtung verbunden ist. Die Anzeigeeinrichtung hat eine Benutzeroberfläche, die sich kantenübergreifend zwischen einem festgelegten Bereich der Stirnseite und einem festgelegten Bereich des Türblatts erstreckt. Die Steuereinrichtung ist ausgestaltet, die Anzeigeeinrichtung zur Informationsanzeige anzusteuern, wobei die Informationsanzeige türblattseitig und/oder stirnseitig erfolgt.

Ein anderer Aspekt betrifft ein Verfahren zum Betreiben des Gebäude-Schiebetürsystems. Gemäss dem Verfahren wird die elektronische Anzeigeeinrichtung für eine Informationsanzeige durch die Steuereinrichtung so angesteuert, dass die Informationsanzeige türblattseitig und/oder stirnseitig erfolgt.

Die hier beschriebene Erfindung schafft ein Gebäude-Schiebetürsystem, bei dem die elektronische Anzeigeeinrichtung bzw. durch sie dargestellte Information von einem Nutzer in der geschlossen Position der Schiebetür und in deren geöffneter Position wahrgenommen werden kann. In der (vollständig) geöffneten Position kann der türblattseitige Teil der Anzeigeeinrichtung dabei ganz oder teilweise in den Wandschalenbereich hineinragen und durch ihn verdeckt werden, während der stirnseitige Teil der Anzeigeeinrichtung sichtbar bleibt und dort Information angezeigt werden kann.

In einem Ausführungsbeispiel steuert die Steuereinrichtung die Anzeigeeinrichtung als Funktion einer ermittelten Position der Schiebetür an, insbesondere als Funktion einer Distanz D zwischen der Stirnseite und dem Türrahmenbereich, wobei die Informationsanzeige in der geschlossenen Position der Schiebetür türblattseitig, in der geöffneten Position stirnseitig und in einer Zwischenposition türblattseitig und/oder stirnseitig erfolgt. Die Informationsanzeige kann beispielsweise beim Öffnen so erfolgen, dass die darzustellende Information (aus Sicht und Wahrnehmung eines vor der Schiebetür stehenden Nutzers) ausgehend von einer türblattseitigen Darstellung quasi fliesend in die stirnseitige Darstellung verschoben wird, so dass sie vom Nutzer während dem Öffnen bestmöglich wahrgenommen werden kann.

In einem Ausführungsbeispiel erfolgt das Verschieben in die stirnseitige Darstellung, wenn die Distanz D einen festgelegten Schwellenwert erreicht oder überschreitet. Der Schwellenwert kann gebäude- und/oder anwendungsspezifisch gewählt werden. In einem Ausführungsbeispiel beträgt der Schwellenwert ca. 80 %, d. h. die Schiebetür ist zu 80 % geöffnet. In einem Ausführungsbeispiel beginnt beim Erreichen des Schwellenwerts ein Fliessmodus; bei einem Schwellenwert von ca. 80 % wird die Informationsanzeige daher erst dann von der türblattseitigen Anzeige in Richtung der Stirnseite verschoben, wenn die Schiebetür bereits relativ weit geöffnet ist. Die Information kann daher vom Nutzer auch dann wahrgenommen werden, wenn die Schiebetür im Wesentlichen vollständig geöffnet ist.

Zur Bestimmung der Position der Schiebetür können verschiedene Technologien verwendet werden. In einem Ausführungsbeispiel kann ein in der elektromechanischen Antriebseinheit vorhandener Drehgeber verwendet werden, der bei einem durch die Antriebseinheit veranlassten Verschieben der Schiebetür eine Winkeländerung detektiert. Die Steuereinrichtung ist ausgestaltet, aus der Winkeländerung die Position der Schiebetür, insbesondere die Distanz D zwischen der Stirnseite und dem Türrahmenbereich, zu ermitteln. In einem anderen Ausführungsbeispiel kann eine an der Schiebetür angeordnete Sensoreinheit (z. B. eine 3D-Kamera) verwendet werden, die mit der Steuereinrichtung verbunden ist und die Distanz D ermittelt, um aus der Distanz D eine Position der Schiebetür zu ermitteln.

Je nach Art oder Nutzung des Gebäudes oder des Schiebetürsystems, kann die Anzeigeeinrichtung mindestens eine weitere Einrichtung für eine weitere Funktionalität umfassen. Dadurch kann in einer Ausgestaltung an der Schiebetür lediglich an einem einzigen Ort eine sichtbare (multifunktionale) Einheit angeordnet werden, wodurch die Installation, Wartung und Reinigung erleichtert werden. Die weiteren Einrichtungen können insbesondere eine Videokamera für eine Türspion-Funktion und/oder zum Erfassen eines optischen Codes, eine Funkeinheit zum Erfassen eines Berechtigungsnachweises und/oder zur Kommunikation mit einem Mobiltelefon eines Nutzers, einen Lautsprecher, einen Näherungssensor zur Detektion eines sich annähernden Nutzers, und/oder eine LED Beleuchtungseinrichtung zum Beleuchten der Anzeigeeinrichtung und/oder einer Umgebung der Schiebetür umfassen. Der Fachmann erkennt, dass eine oder mehrere dieser Einrichtungen ausserhalb der Anzeigeeinrichtung angeordnet werden können; eine Videokamera kann beispielsweise in einer typischen Kopfhöhe/Gesichtshöhe einer stehenden erwachsenen Person angeordnet werden.

Im Folgenden ist die Erfindung anhand von Ausführungsbeispielen in Verbindung mit den Figuren näher erläutert. In den Figuren haben gleiche Elemente gleiche Bezugszeichen. Es zeigen:
- Fig. 1: eine schematische perspektivische Darstellung eines Ausführungsbeispiels eines Gebäude-Schiebetürsystems mit einer teilweise geöffneten Schiebetür und einer daran angeordneten Anzeigeeinrichtung;
- Fig. 2A-2D: schematische Darstellungen der Anzeigeeinrichtung gemäss Fig. 1 mit einer beispielhaften Informationsanzeige;
- Fig. 3: ein Ablaufdiagram eines Ausführungsbeispiels eines Verfahrens zum Betreiben des Gebäude-Schiebetürsystems; und
- Fig. 4A-4C: schematische Darstellungen der Schiebetür gemäss Fig. 1 in verschiedenen Positionen (geschlossene Position, teilweise geöffnete Position, vollständig geöffnete Position).

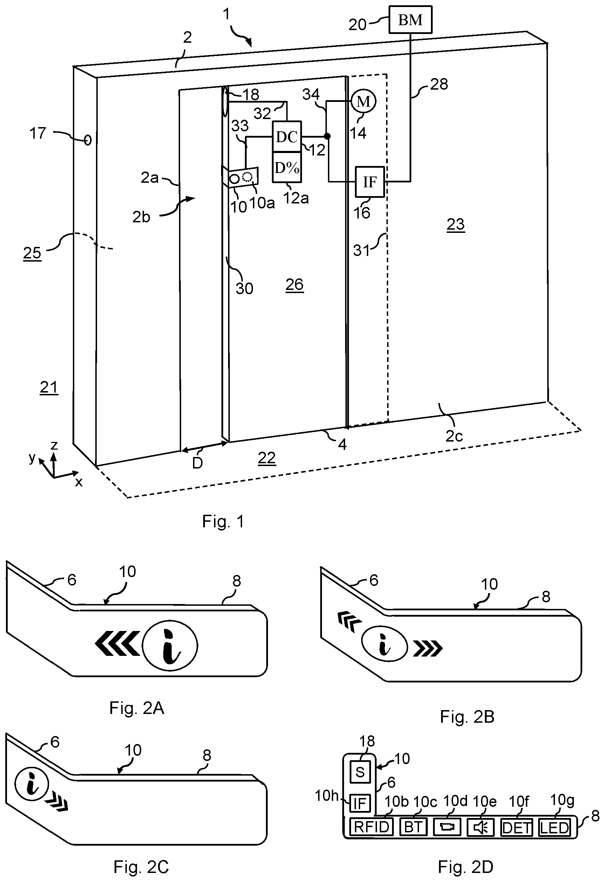

**Fig. 1** ist eine schematische perspektivische Darstellung eines Ausführungsbeispiels eines Gebäude-Schiebetürsystems 1 zum Abtrennen einer ersten Gebäudezone 21 von einer zweiten Gebäudezone 22. Das Gebäude-Schiebetürsystem 1 kann in einem Ausführungsbeispiel ein Teil einer Gebäudeinnenwand sein, beispielsweise kann es in einem Mehrfamilienhaus den privaten Innenbereich einer Wohnung (z. B. die erste Zone 21) von einem (nicht privaten) Aussenbereich (z. B. Hausflur oder Treppenhaus) (z. B. die zweite Zone 22) trennen. Analog dazu kann das Gebäude-Schiebetürsystem 1 beispielsweise in einer Gebäudeinnenwand in einem Bürogebäude, Hotel o.ä. verwendet werden; in einem Hotel kann das Gebäude-Schiebetürsystem 1 beispielsweise zwei benachbarte Zimmer trennen. Das Gebäude-Schiebetürsystem 1 kann in einem anderen Ausführungsbeispiel ein Teil einer Gebäudeaussenwand sein, beispielsweise kann es den Innenbereich (z. B. die erste Zone 21) eines nicht öffentlichen Gebäudes (z. B. ein Wohnhaus, Hotel, Geschäftshaus o. ä.) vom öffentlichen Aussenbereich (z. B. einer Strasse oder eines öffentlichen Platzes) (z. B. die zweite Zone 22) trennen. Im Folgenden ist die erste Zone 21 als Innenzone 21 bezeichnet, und die zweite Zone 22 ist als Aussenzone 22 bezeichnet.

Das Gebäude-Schiebetürsystem 1 umfasst im gezeigten Ausführungsbeispiel eine Rahmenstruktur 2, in der unterschiedliche Bereiche festgelegt sein können. Zur Illustration und Unterscheidbarkeit sind diese Bereiche im Folgenden als Türrahmenbereich 2a, Durchgangsbereich 2b und Wandschalenbereich 2c bezeichnet. Das Gebäude-Schiebetürsystem 1 umfasst ausserdem eine Schiebetür 4, die in der Rahmenstruktur 2 zwischen einer geschlossenen Position und einer geöffneten Position entlang einer Schiebeachse x verschiebbar ist. In der geschlossenen Position verschliesst die Schiebetür 4 den Durchgangsbereich 2b, und in der geöffneten Position gibt die Schiebetür 4 den Durchgangsbereich 2b ganz oder teilweise frei, so dass beispielsweise eine Person, ein Haustier oder ein Roboter von einer der Zonen 21, 22 in die jeweils andere Zone gelangen können. In der in **Fig. 1** gezeigten teilweise geöffneten Position hat eine Stirnseite 30 der Schiebetür 4 eine Distanz D zum Türrahmenbereich 2a. Weitere Details zum mechanischen Aufbau der Rahmenstruktur 2 und der Schiebetür 4 sind an anderer Stelle dieser Beschreibung angegeben.

In **Fig. 1** ist angedeutet, dass das Gebäude-Schiebetürsystem 1 elektronische und elektromechanische Systemkomponenten umfasst und mit einem Gebäudesteuerungssystem 20 (BM) verbunden ist. In einem Ausführungsbeispiel ist das Gebäude-Schiebetürsystem 1 mit dem Gebäudesteuerungssystem 20 (BM) kommunikativ verbunden. Als beispielhafte Systemkomponenten des Gebäude-Schiebetürsystems 1 sind eine elektrische Schnittstelleneinrichtung 16, eine Steuereinrichtung 12 (DC), eine Antriebseinheit 14 (M), eine Sensoreinheit 18 und eine elektronische Anzeigeeinrichtung 10 eingezeichnet. Die Steuereinrichtung 12 steuert das Öffnen und Schliessen der Schiebetür 4 und speichert zumindest für eine festgelegte Zeitdauer einen aktuellen Betriebszustand der Schiebetür 4 in einer Speichereinrichtung 12a (D%). Dazu gehört u. a. Information über die Distanz D der Stirnseite 30 zum Türrahmenbereich 2a, wobei die Distanz D zwischen Null und einer maximalen Distanz Dmax variieren kann (0 ≤ D ≤ Dmax). In der Steuereinrichtung 12 liegt somit Information vor, die angibt, ob die Schiebetür 4 geschlossen ist (D = 0), ganz geöffnet ist (D = Dmax) oder teilweise geöffnet ist (0 < D < Dmax). Die Distanz D kann als ein Absolutwert (Länge, z. B. in Zentimeter) oder als prozentualer Wert angegeben sein. Ausführungsbeispiele, wie diese Distanz D bestimmt werden kann, sind an anderer Stelle dieser Beschreibung angegeben.

In der in **Fig. 1** gezeigten Situation ist ein erfindungsgemäßes Gebäude-Schiebetürsystem in vorteilhafter Weise anwendbar. Kurz und beispielhaft zusammengefasst ermöglicht die hier beschriebene Erfindung, dass die elektronische Anzeigeeinrichtung 10 bzw. von ihr dargestellte Information von einem Nutzer in der geschlossen Position und in der geöffneten Position wahrgenommen werden kann. Die Anzeigeeinrichtung 10 ist dafür in einem festgelegten Höhenabschnitt (z. B. zwischen ca. 1 m und 1,5 m) an der Schiebetür 4 angeordnet. Eine Benutzeroberfläche 10a der Anzeigeeinrichtung 10 erstreckt sich kantenübergreifend zwischen einem festgelegten Bereich der Stirnseite 30 und einem festgelegten Bereich eines Türblatts 26 der Schiebetür 4. Da ein Hohlraum im Wandschalenbereich 2c die Schiebetür 4 in der (vollständig) geöffneten Position aufnimmt, kann der türblattseitige Teil der Anzeigeeinrichtung 10 dabei ganz oder teilweise in den Wandschalenbereich 2 hineinragen und durch ihn verdeckt werden, während der stirnseitige Teil der Anzeigeeinrichtung 10 sichtbar ist und dort Information angezeigt werden kann. Die Steuereinrichtung 12 steuert dementsprechend über einer elektrischen Verbindung 33 die Anzeigeeinrichtung 10 zur Informationsanzeige an. In einem Ausführungsbeispiel steuert die Steuereinrichtung 12 die Anzeigeeinrichtung 10 als Funktion einer ermittelten Position der Schiebetür 4, insbesondere als Funktion der Distanz D, an, wobei die Informationsanzeige in der geschlossenen Position der Schiebetür 4 türblattseitig, in der geöffneten Position stirnseitig und in einer Zwischenposition türblattseitig und/oder stirnseitig erfolgt. Die Informationsanzeige kann beispielsweise beim Öffnen so erfolgen, dass die darzustellende Information ausgehend von einer türblattseitigen Darstellung quasi fliesend in die stirnseitige Darstellung verschoben wird, so dass sie vom Benutzer bestmöglich wahrgenommen werden kann. In einem Ausführungsbeispiel erfolgt das Verschieben in die stirnseitige Darstellung, wenn die Distanz D einen festgelegten Schwellenwert erreicht oder überschreitet. Beispielhafte Anzeigeoptionen sind in **Fig. 2A** **-** **Fig. 2C** gezeigt. In der vorliegenden Beschreibung werden Begriffe "fliessen", "verschieben", "drücken", "Fliessvorgang" und "Fliessmodus" verwendet, um einen Vorgang insbesondere aus Sicht und Wahrnehmung eines Nutzers zu beschreiben und zu charakterisieren.

Schematische Darstellungen eines Ausführungsbeispiels der Anzeigeeinrichtung 10 sind in **Fig. 2A** **-** **Fig. 2D** gezeigt. Elektrische Anschlüsse oder Leitungen zur Verbindung mit der Steuereinrichtung 12 sind dabei nicht gezeigt; der Fachmann erkennt jedoch, dass diese vorhanden sind. Der Fachmann erkennt auch, dass die Anzeigeeinrichtung 10 eine Steuerelektronik (nicht gezeigt) umfassen kann. Die Anzeigeeinrichtung 10 ist derart ausgestaltet, dass sich ihre Benutzeroberfläche 10a kantenübergreifend zwischen einem festgelegten Bereich der Stirnseite 30 und einem festgelegten Bereich des Türblatts 26 erstreckt. In einem Ausführungsbeispiel hat die Anzeigeeinrichtung 10 ein stirnseitiges Segment 6 und ein türblattseitiges Segment 8, die in den gezeigten Ausführungsbeispielen zueinander winklig, im Wesentlichen rechtwinklig angeordnet sind; dies ist insbesondere in der in **Fig. 2D** gezeigten Draufsicht ersichtlich. Dabei kann es sich um zwei getrennte Segmente 6, 8 (einzelne Anzeigeeinrichtungen) handeln, die an oder im Bereich der Kante miteinander verbunden sind und von der Steuereinrichtung 12 bzw. der Steuerelektronik der Anzeigeeinrichtung 10 so angesteuert werden, dass die Informationsanzeige kantenübergreifend angezeigt wird. In einer anderen Ausführung kann eine (einzige bzw. einstückige) gebogene Anzeigeeinrichtung die Segmente 6, 8 umfassen, wie an anderer Stelle dieser Beschreibung ausgeführt.

Aus der in **Fig. 2D** gezeigten Draufsicht ist ausserdem ersichtlich, dass die Segmente 6, 8 in den gezeigten Ausführungsbeispielen (in x- Richtung und y-Richtung) verschieden lang sind (L-förmige Anordnung), wobei sich das kürzere Segment 6 stirnseitig in y-Richtung erstreckt und das längere Segment 8 türblattseitig in x-Richtung. In z-Richtung haben die Segmente 6, 8 die gleiche Länge. In einem anderen Ausführungsbeispiel können die Segmente 6, 8 in x- Richtung und y-Richtung gleich lang sein, oder das stirnseitige Segment 6 kann länger als das türblattseitige Segment 8 sein. In einer Ausgestaltung können die Segmente 6, 8 in z-Richtung länger als in x-Richtung und y-Richtung sein, so dass sich eine hochkantig angeordnete Anzeigeeinrichtung 10 ergibt. Die Abmessungen der Anzeigeeinrichtung 10, insbesondere die Grösse der Segmente 6, 8, können abhängig von der Art des Gebäudes und/oder des Umfangs der darzustellenden Information festgelegt sein.

Aus den Darstellungen der **Fig. 2A** **-** **Fig. 2D** ist zudem ersichtlich, dass sich die Anzeigeeinrichtung 10 bzw. deren Benutzeroberfläche 10a kantenübergreifend erstreckt. Anders ausgedrückt, die Benutzeroberfläche 10a endet stirn- oder türblattseitig nicht an oder vor der Kante zwischen dem Türblatt 26 und der Stirnseite 30 um dann quasi als eine neue, zweite Benutzeroberfläche 10a auf der anderen Seite an dieser Kante erneut zu beginnen, sondern es handelt sich um eine Benutzeroberfläche 10a, die die Kante überdeckt, sie umgreift und auf der einen Seite beginnt und auf der anderen Seite des weiterläuft. Die Anzeigeeinrichtung 10, die insbesondere einstückig gebogen ist, umfasst in einem Ausführungsbeispiel ein Leuchtdioden-Netz (auch als LED-Netz oder LED-Gewebe bekannt) oder einen flexiblen Leuchtdiodenbildschirm (LED-(Display-)Einheit), insbesondere bestehend aus LEDs, die auf einem flexiblen Trägermaterial (flexible Platine) befestigt sind, die wiederum in einem Gewebe eingebettet ist. Flexible Anzeigevorrichtungen können auch organische LEDs (OLEDs) umfassen, wodurch sich jeweils eine OLED-Einheit ergibt; diese können auch als berührungsempfindliche Anzeigevorrichtungen ausgestaltet sein, deren Strukturen und Funktionsweisen, einschliesslich Angaben zur elektronischen Ansteuerung, beispielsweise aus US 2017/0336831 A1 und WO 2013/048881 A1 bekannt sind. In einem anderen Ausführungsbeispiel umfasst die Anzeigeeinrichtung 10 eine LCD-Einheit, die ebenfalls kantenumgreifend ausgestaltet sein kann.

Die Anzeigeeinrichtung 10 hat in einem Ausführungsbeispiel eine Glas- oder Kunststoffoberfläche, die sich über die Benutzeroberfläche 10a erstreckt. Die Glas- oder Kunststoffoberfläche kann so geformt sein, dass sie sich nahtlos über die Segmente 6, 8 und eine dazwischen bestehende Krümmung erstreckt, wie es in den Darstellungen der **Fig. 2A** **-** **Fig. 2D** ersichtlich ist. Damit die Informationsanzeige von einem Nutzer wahrgenommen werden kann, ist die Glas- oder Kunststoffoberfläche für sichtbares Licht transparent. Zusätzlich kann die Glas- oder Kunststoffoberfläche so ausgestaltet sein, dass die Anzeigeeinrichtung 10 als berührungsempfindliche Anzeigevorrichtungen ausgestaltet werden kann. Neben diesen Eigenschaften schützt die Glas- oder Kunststoffoberfläche die Anzeigeeinrichtung 10 vor Beschädigungen und ermöglicht eine einfache Reinigung. Verfahren zur Herstellung von Glas- oder Kunststoffoberflächen mit den genannten Eigenschaften sind dem Fachmann bekannt.

Die Anzeigeeinrichtung 10 wird erfindungsgemäß zur Darstellung von Information genutzt, wobei die Information einen Nutzer beispielsweise über den Status der Schiebetür 4, über deren Benutzung und/oder über einen Zustand des Gebäudes oder der durch die Schiebetür 4 abgetrennten Zone 21, 22 informieren kann. Die Information kann durch Piktogramme, Symbole und/oder Text dargestellt werden; Piktogramme oder Symbole können beispielsweise informieren, dass die Schiebetür 4 verschlossen ist, dass die Schiebetür 4 entsperrt ist, dass bestimmte Handlungen unerwünscht bzw. untersagt sind (z. B. Rauchen oder Telefonieren) und dass der Zutritt nicht gestattet ist. Text, allein oder in Kombination mit einem Piktogramm oder Symbol, kann beispielsweise eine Anweisung oder Unterrichtung sein (z. B. "Bitte berühren", "Bitte warten", "Kein Zugang", "Nicht stören", "Notausgang", "Rettungsweg", "Brandalarm" o. ä.) oder den Namen des Nutzers anzeigen. Zusätzlich kann in einem Ausführungsbeispiel ein hörbares Signal und/oder eine dem Piktogramm oder Symbol entsprechende Sprachmitteilung veranlasst werden.

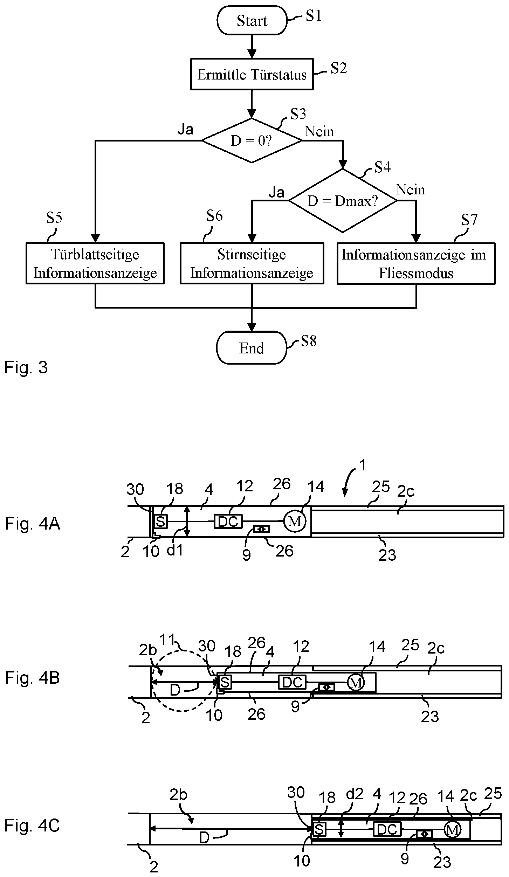

Befindet sich die Schiebetür 4 in der geschlossenen Position, wird die Anzeigeeinrichtung 10 so angesteuert, dass Information auf dem türblattseitigen Segment 8 angezeigt wird, wie es in **Fig. 2A** dargestellt ist. Das stirnseitige Segment 6, das in der geschlossenen Position im Wesentlichen durch den Türrahmenbereich 2a verdeckt ist, wird dabei nicht angesteuert. In **Fig. 2C** befindet sich die Schiebetür 4 in der geöffneten Position und die Anzeigeeinrichtung 10 wird in diesem Ausführungsbeispiel so angesteuert, dass Information auf dem stirnseitigen Segment 6 angezeigt wird. Zwischen diesen beiden Positionen der Schiebetür 4 wird die Anzeigeeinrichtung 10 so angesteuert, dass Information auf dem stirnseitigen Segment 6 und/oder dem türblattseitigen Segment 8 angezeigt wird, wie es in **Fig. 2B** beispielhaft dargestellt ist. In einem Ausführungsbeispiel erfolgt die Ansteuerung so, dass die Informationsanzeige beim Einfahren der Schiebetür 4 in den Wandschalenbereich 2c vom Nutzer so wahrgenommen wird, als würde die Informationsanzeige vom Wandschalenbereich 2c nach vorne "gedrückt" werden, als würde der Anzeigeinhalt stehen, während die Schiebetür 4 weiterfährt; in Verbindung mit dem in **Fig. 4** gezeigten Ablaufdiagram ist dies illustrativ als Fliessmodus bezeichnet. In einem Ausführungsbeispiel beginnt dieser Fliessmodus, wenn die Distanz D den festgelegten Schwellenwert erreicht oder überschreitet; in einem Ausführungsbeispiel beträgt dieser Schwellenwert 80 %, d. h. die Schiebetür 4 ist zu 80 % geöffnet. Bis zu dieser 80 %-igen Türöffnung (z. B. bis die Anzeigeeinrichtung 10 anfängt, im Wandschalenbereich 2c zu verschwinden) bleibt in diesem Ausführungsbeispiel das türblattseitige Segment 8 aktiv und zeigt die Information an. Der Fliessvorgang beginnt erst kurz bevor die Schiebetür 4 vollständig geöffnet ist. Der Fachmann erkennt, dass der Fliessvorgang bzgl. der Informationsanzeige während dem ganzen Öffnungsvorgang oder erst gegen Ende des Öffnungsvorgangs erfolgen kann. Der Fachmann erkennt auch, dass je nach Art und Nutzung des Gebäudes oder der Schiebetür 4 ein anderer Schwellenwert gewählt werden kann. Der Fachmann erkennt, dass analog zum Öffnungsvorgang beim Schliessvorgang die Informationsanzeige vom stirnseitigen Segment 6 zum türblattseitigen Segment 8 verschoben werden kann; beispielsweise kann das Verschieben beginnen, wenn der Schwellenwert (80 %) beim Schliessvorgang erreicht wird.

Wie oben erwähnt, erfolgt die Ansteuerung der Anzeigeeinrichtung 10 bzw. deren Benutzeroberfläche 10a zur Informationsanzeige als Funktion einer ermittelten Position der Schiebetür 4, insbesondere als Funktion der Distanz D. In einem Ausführungsbeispiel kann ein in der Antriebseinheit 14 (Motor) integrierter Drehgeber genutzt werden, um die Position der Schiebetür 4 bzw. die Distanz D zu ermitteln. Drehgeber (auch Inkrementalgeber oder Encoder genannt) sind dem Fachmann bekannt, sie können zur Erfassung von Winkeländerungen und einer Drehrichtung ausgestaltet sein. Dreht sich der Motor, um die Schiebetür 4 zu verfahren, führt jede Winkeländerung um einen festgelegten Winkel nach links oder nach rechts zu einer festgelegten Änderung einer Stellgrösse (z. B. eine zurückgelegte Wegstrecke der Schiebetür wird um eins erhöht oder erniedrigt (Inkrement (+ 1) oder Dekrement (- 1))); bei bekannten Werten für die geschlossene Position und die geöffnete Position der Schiebetür 4 kann aus der Winkeländerung bzw. der zurückgelegten Wegstrecke die (Distanz D) ermittelt werden. Die Werte für die geschlossene Position und die geöffnete Position der Schiebetür 4 können beispielsweise bei einer Inbetriebnahme der Schiebetür 4 durch eine Initialisierungsfahrt bestimmt werden.

In einem Ausführungsbeispiel kann die Sensoreinheit 18 genutzt werden, um die Position der Schiebetür 4 bzw. die Distanz D zu ermitteln. Die Sensoreinheit 18 ist durch eine elektrische Verbindung 32 mit der Steuereinrichtung 12 verbunden und in einem Bereich der Stirnseite 30 der Schiebetür 4 angeordnet. Die Anordnung der Sensoreinheit 18 kann so gewählt sein, dass der Durchgangsbereich 2b überwacht und die Distanz D ermittelt werden können. Durch die Überwachung kann erkannt werden, ob der Durchgangsbereich 2b frei ist, d. h. es befindet sich dort weder ein Nutzer noch ein Hindernis, und die Schiebetür 4 geschlossen werden kann. Die Anordnung kann so gewählt sein, dass sich von der Sensoreinheit 18 beispielsweise emittierte elektromagnetische Strahlung (Licht- oder Funkwellen) im Betrieb ungehindert in Richtung des Durchgangsbereichs 2b ausbreiten kann. Umfasst die Sensoreinheit 18 eine Kamera, die im Infrarot oder sichtbaren elektromagnetischen Spektrum detektiert, kann die Anordnung so gewählt sein, dass sich der Durchgangsbereich 2b im "Blickfeld" der Kamera befindet. Die Sensoreinheit 18 kann z. B. in eine Aussparung an der Stirnseite 30 eingesetzt und durch eine strahlungsdurchlässige Abdeckung vor Beschädigung und Schmutz geschützt sein. Zur Ermittlung der Distanz D kann die Sensoreinheit 18 zusätzlich in einer Höhe angeordnet sein, so dass sich unter normalen Umständen kein Hindernis oder Nutzer zwischen der Sensoreinheit 18 und dem Türrahmenbereich 2a befindet.

Für diese Funktionen kann die Sensoreinheit 18 einen oder mehrere Sensoren umfassen, beispielsweise einen oder mehrere Sensoren oder 3D-Kameras, die auf dem Prinzip der Lichtlaufzeitmessung ("Time of Flight", TOF Sensor) beruhen. Eine solche 3D-Kamera umfasst eine Leuchtdioden- oder Laserdioden-Einheit, die zum Beispiel Licht im infraroten Bereich aussendet, wobei das Licht in kurzen Impulsen (z. B. mehrere 10 Nanosekunden lang) emittiert wird. Die 3D-Kamera umfasst zudem eine Sensorgruppe aus einer Anzahl von lichtempfindlichen Elementen. Die Sensorgruppe ist mit einem Verarbeitungschip (z. B. ein CMOS Sensorchip) verbunden, der die Laufzeit des emittierten Lichtes bestimmt. Der Verarbeitungschip misst in wenigen Millisekunden simultan die Distanz zu einer ganzen Anzahl von Zielpunkten im Raum. Die 3D-Kamera kann auch auf einem Messprinzip beruhen, bei dem die Laufzeit von ausgesendetem Licht über die Phase des Lichts erfasst wird. Dabei wird die Phasenlage beim Senden des Lichtes und beim Empfangen verglichen und daraus die verstrichene Zeit bzw. der Abstand zum reflektierenden Objekt ermittelt. Dazu wird vorzugsweise statt kurzen Lichtimpulsen ein moduliertes Lichtsignal emittiert. Weitere Details zu diesen Messprinzipien sind beispielsweise in folgenden Veröffentlichungen angegeben: "Fast Range Imaging by CMOS Sensor Array Through Multiple Double Short Time Integration (MDSI)", P. Mengel et al., Siemens AG, Corporate Technology Department, München, Deutschland, und "A CMOS Photosensor Array for 3D Imaging Using Pulsed Laser", R. Jeremias et al., 2001 IEEE International Solid-State Circuits Conference, Seite 252.

In einem anderen Ausführungsbeispiel kann die Funktionalität der Sensoreinrichtung 18 und die Funktionalität der Anzeigeeinrichtung 10 in einer Einrichtung zusammengefasst sein; beispielsweise kann die Funktionalität der Sensoreinrichtung 18 in der Anzeigeeinrichtung 10 implementiert sein, wie in **Fig. 2D** gezeigt. Für die Funktionalität der Sensoreinrichtung 18 kann die 3D-Kamera z. B. stirnseitig unter der Glas- oder Kunststoffoberfläche der Anzeigeeinrichtung 10 angeordnet sein. In einem Ausführungsbeispiel kann in der Anzeigeeinrichtung 10 mindestens eine weitere Einrichtung für eine weitere Funktionalität implementiert sein. **Fig. 2D** zeigt eine Ausgestaltung mit mehreren solcher Einrichtungen, beispielhaft gezeigt sind eine Videokamera 10d für eine Türspion-Funktion und/oder zum Erfassen eines optischen Codes (z. B. einen Strichcode, einen Matrixcode (QR Code)), eine Funkeinheit 10b, 10c (z. B. gemäss einem Standard für RFID oder Bluetooth Technologien) zum Erfassen eines Berechtigungsnachweises und/oder zur Kommunikation mit einem Mobiltelefon eines Nutzers, ein Lautsprecher 10e, ein Näherungssensor 10f zur Detektion eines sich annähernden Nutzers, und/oder eine LED Beleuchtungseinrichtung 10g zum Beleuchten der Anzeigeeinrichtung 10 und/oder einer Umgebung der Schiebetür 4. Diese Einrichtungen können über eine Schnittstelleneinrichtung 10 mit der Steuereinrichtung 12 verbunden sein. Alternativ dazu können die Einrichtungen ausschliesslich oder zusätzlich mit der Steuerelektronik der Anzeigeeinrichtung 10 verbunden sein, um von dieser gesteuert zu werden und/oder mit dieser zu kommunizieren. Die genannten Einrichtungen und deren Funktionsweisen sind dem Fachmann bekannt, so dass weitergehende Ausführungen hierzu an dieser Stelle nicht erforderlich erscheinen.

Mit dem Verständnis der oben beschriebenen prinzipiellen Systemkomponenten und deren Funktionalitäten, erfolgt im Folgenden in Verbindung mit **Fig. 3** eine Beschreibung eines beispielhaften Verfahrens zum Betreiben des Gebäude-Schiebetürsystems 1 ausgehend von der in **Fig. 1** gezeigten Situation. Das in **Fig. 3** gezeigte Verfahren beginnt in einem Schritt **S1** und endet in einem Schritt **S8.** Der Fachmann erkennt, dass die Aufteilung in diese Schritte beispielhaft ist und dass einer oder mehrere dieser Schritte in einen oder mehrere Teilschritte aufgeteilt oder dass mehrere der Schritte zu einem Schritt zusammengefasst werden können.

In einem Schritt **S2** wird ermittelt, in welchem Status sich die Schiebetür 4 befindet. Wie oben ausgeführt, kann z. B. mit Hilfe des Drehgebers die Distanz D der Stirnseite 30 zum Türrahmenbereich 2a ermittelt werden. Daraus ergibt sich der Status der Schiebetür 4: Schiebetür 4 geschlossen (D = 0), vollständig geöffnet (D = Dmax) oder teilweise geöffnet (0 < D < Dmax).

In einem Schritt **S3** wird geprüft, ob die Schiebetür 4 geschlossen ist, d. h. D = 0. Ist dies der Fall, schreitet das Verfahren entlang des Ja-Zweigs zu einem Schritt **S5.** Bei geschlossener Schiebetür 4 erfolgt im Schritt **S5** die Informationsanzeige türblattseitig. Die Steuereinrichtung 12 steuert die Anzeigeeinrichtung 10 dafür entsprechend an.

Ergibt die Prüfung im Schritt **S3,** dass die Schiebetür 4 nicht geschlossen ist, schreitet das Verfahren entlang des Nein-Zweigs zu einem Schritt **S4.** Im Schritt **S4** wird geprüft, ob die Schiebetür 4 vollständig geöffnet ist, d. h. D = Dmax. Ist dies der Fall, schreitet das Verfahren entlang des Ja-Zweigs zu einem Schritt **S6.** Bei vollständig geöffneter Schiebetür 4 erfolgt im Schritt **S6** die Informationsanzeige stirnseitig. Die Steuereinrichtung 12 steuert die Anzeigeeinrichtung 10 dafür entsprechend an.

Ergibt die Prüfung im Schritt **S4** dagegen, dass die Schiebetür 4 nicht vollständig geöffnet ist, schreitet das Verfahren entlang des Nein-Zweigs zu einem Schritt **S7.** Die Schiebetür 4 ist daher weder geschlossen noch vollständig geöffnet. In diesem Status der Schiebetür 4 erfolgt die Informationsanzeige im Schritt **S7** im (hier beispielhaft bezeichneten) Fliessmodus, in dem die Informationsanzeige von einem Segment 6, 8 in das andere Segment 6, 8 verschoben wird. In **Fig. 3** endet das Verfahren im Schritt **S8.**

Der Fachmann erkennt, dass sich der Status der Schiebetür 4 beispielsweise dann ändert, wenn sie von einem Nutzer betätigt wird, beispielsweise um sie zu öffnen. Ist die Schiebetür 4 daran anschliessend vollständig geöffnet, kann sie für eine festgelegte Zeitdauer in der vollständig geöffneten Position bleiben, um danach automatisch zu schliessen.

Erneut Bezug nehmend auf **Fig. 1** erfolgt im Folgenden eine Beschreibung von weiteren Details zum mechanischen Aufbau der Rahmenstruktur 2 und der Schiebetür 4. Der Türrahmenbereich 2a befindet sich links vom Durchgangsbereich 2b, wobei er sich auch über den Durchgangsbereich 2b erstrecken kann, und der Wandschalenbereich 2c befindet sich rechts vom Durchgangsbereich 2b, wobei er sich auch über den Durchgangsbereich 2b erstrecken kann. Der Durchgangsbereich 2b ist somit vom Türrahmenbereich 2a, dem Wandschalenbereich 2a und einem Gebäudeboden bzw. einer dort angeordneten Schwelle oder Führungsschiene umgeben.

An der Rahmenstruktur 2 ist ein der Innenzone 21 zugewandtes Wandpaneel 25 (im Folgenden auch als Wandinnenpaneel 25 bezeichnet), ein der Aussenzone 22 zugewandtes Wandpaneel 23 (im Folgenden auch als Wandaussenpaneel 23 bezeichnet) und seitliche Befestigungseinrichtungen 17 angeordnet. Das Wandinnenpaneel 25 ist im Wesentlichen parallel zum Wandaussenpaneel 23 angeordnet, wobei die Wandpaneele 23, 25 insbesondere den Türrahmenbereich 2a und den Wandschalenbereich 2c abdecken (verkleiden) und gestalterisch an die umgebende Wand angepasst werden können. Die seitlichen Befestigungseinrichtungen 17 sind zum Verbinden des Gebäude-Schiebetürsystems 1 mit dem Gebäude vorgesehen. Bezogen auf das in **Fig. 1** gezeigte x-y-z Koordinatensystem hat das Gebäude-Schiebetürsystem 1 in x-Richtung eine Länge, in y-Richtung eine Tiefe und in z-Richtung eine Höhe; das Gebäude-Schiebetürsystem 1 erstreckt sich in einer Ebene, die durch die x- und z-Achsen aufgespannt wird. Die Schiebetür 4 ist in x-Richtung entlang einer Schiebeachse verschiebbar. In der in **Fig. 1** gezeigten Darstellung entspricht die Schiebeachse der x-Achse; die Schiebeachse hat in dieser Darstellung daher das Bezugszeichen x (Schiebeachse x).

Der Wandschalenbereich 2c umfasst einen Hohlraum zwischen den Wandpaneelen 23, 25, der so bemessen ist, dass er die Schiebetür 4 in der geöffneten Position zumindest teilweise aufnimmt. Die Schiebetür 4 hat zwei im Wesentlichen parallele Türblätter 26 (jeweils an einer Innenseite und einer Aussenseite der Schiebetür 4) und die Stirnseite 30, die in Richtung des Durchgangsbereichs 2b zeigt und sich quer zur Schiebeachse x erstreckt. Die Türblätter erstrecken sich von der Stirnseite 30 ausgehend im Wesentlichen parallel zur Schiebeachse x und haben zueinander (in y-Richtung) einen Abstand, so dass zwischen den Türblättern 26 ein Innenraum vorhanden ist, in dem Systemkomponenten und Dämmmaterial, z. B. für Schall- und Brandschutz, angeordnet werden können. Jedes der Türblätter 26 erstreckt sich im Wesentlichen parallel zur x-z-Ebene.

Im in **Fig. 1** gezeigten Ausführungsbeispiel erfolgt die Verbindung das Gebäude-Schiebetürsystems 1 mit dem Gebäudesteuerungssystem 20 (BM) mittels einer elektrischen Verbindung 28. Über diese Verbindung 28 kann das Gebäude-Schiebetürsystem 1 z. B. mit elektrischer Energie versorgt werden. In einem Ausführungsbeispiel kann mit der zugeführten Energie ein Betrieb des Gebäude-Schiebetürsystems 1 gewährleistet werden, ohne dass ihm externe Steuersignale oder Steuerbefehle zugeführt werden. Systemkomponenten, die z. B. einen Schlüssel, einen Zugangscode oder eine andere Art von Zugangsberechtigung prüfen, sind in diesem Ausführungsbeispiel (lokal) im Gebäude-Schiebetürsystem 1 integriert, so dass es - bis auf die elektrische Energie - autonom betrieben werden kann.

Die Steuereinrichtung 12 ist ausserdem mittels einer elektrischen Verbindung 34 mit der Antriebseinheit 14 und der Schnittstelleneinrichtung 16 verbunden. Die elektrische Verbindung 32 zwischen der Sensoreinheit 18 und der Steuereinrichtung 12 und die elektrische Verbindung 34, aber auch die elektrische Verbindung 33 zwischen der Steuereinrichtung 12 und der Anzeigeeinrichtung 10, verlaufen innerhalb der Schiebetür 4, beispielsweise zwischen den Türblättern 26. Die elektrischen Verbindungen 32, 33, 34 sind für eine Signal- und/oder Energieübertragung ausgestaltet, sie können dafür jeweils einzelne elektrische Leitungen oder ein elektrisches Bussystem umfassen.

In einem Ausführungsbeispiel können dem Gebäude-Schiebetürsystem 1 externe Steuersignale oder Steuerbefehle zugeführt werden, beispielsweise in Verbindung mit der Überprüfung einer Zugangsberechtigung. In diesem Ausführungsbeispiel ist die elektrische Schnittstelleneinrichtung 16 zudem für eine Kommunikation zwischen dem Gebäudesteuerungssystem 20 und dem Gebäude-Schiebetürsystem 1 vorgesehen. Die elektrische Verbindung 28 umfasst dafür ein Kommunikationsnetz, an das das Gebäudesteuerungssystem 20 und die Schnittstelleneinrichtung 16 gekoppelt sind. Das Gebäudesteuerungssystem 20 kann ein computergestütztes Gebäudeverwaltungssystem umfassen, in dem Daten von zugangsberechtigten Benutzern und Objekten gespeichert sind.

Der Fachmann erkennt, dass das Gebäudesteuerungssystem 20 im Gebäude 2 angeordnet sein kann, wobei das Gebäudesteuerungssystem 20 als lokale und von einem äusseren System unabhängige Einheit für den Betrieb des Gebäude-Schiebetürsystems 1 (oder auch mehrerer solcher Systeme) ausgestaltet ist. In einem Ausführungsbeispiel können Funktionen des Gebäudesteuerungssystems 20 auf lokal im und entfernt vom Gebäude 2 angeordnete Teilsysteme oder Komponenten verteilt sein. Das im Gebäude 2 angeordnete Teilsystem kann dafür mit einer IT-Infrastruktur für das sogenannte Cloud Computing (umgangssprachlich auch als "Cloud" bezeichnet) gekoppelt sein. Darunter ist beispielsweise das Speichern von Daten in einem entfernten Rechenzentrum, aber auch das Ausführen von Programmen, die nicht lokal, sondern entfernt installiert sind, zu verstehen. Je nach Ausgestaltung kann eine bestimmte Funktionalität beispielsweise in der Steuereinrichtung 12 oder über die "Cloud" zur Verfügung gestellt werden. Dazu kann beispielsweise eine Softwareanwendung oder Programmteile davon in der "Cloud" ausgeführt werden. Die Steuereinrichtung 12 greift dann bei Bedarf über die Schnittstelleneinrichtung 16 auf diese Infrastruktur zu, um die Softwareanwendung auszuführen.

Die elektrische Verbindung 28 kann in einem Ausführungssystem ein elektrisches Bussystem umfassen. In einem Ausführungsbeispiel erfolgt die elektrische Anbindung des Gebäude-Schiebetürsystems 1, einschliesslich dessen Versorgung mit elektrischer Energie, über die Schnittstelleneinrichtung 16. Der Fachmann erkennt, dass im Gebäude 2 mehrere Gebäude-Schiebetürsysteme 1 vorhanden sein können und dass jedes dieser Gebäude-Schiebetürsysteme 1 an die elektrische Verbindung 28 gekoppelt sein kann, um mit dem Gebäudesteuerungssystem 20 zu kommunizieren, beispielsweise in Verbindung mit einer Ermittlung und Überprüfung von Zugangsberechtigungen, wenn dies zentral durch das Gebäudesteuerungssystem 20 erfolgt.

Im Folgenden ist die Funktionsweise des Gebäude-Schiebetürsystems 1 unter Bezugnahme auf **Fig. 4A** **-** **Fig. 4C** beschrieben. **Fig. 4A** **-** **Fig. 4C** zeigen jeweils eine schematische Darstellung eines horizontalen Querschnitts eines Ausführungsbeispiels des Gebäude-Schiebetürsystems 1 mit der Schiebetür 4. In jeder dieser Darstellungen sind die von der Schiebetür 4 umfassten Komponenten Sensoreinheit 18 (S), Steuereinrichtung 12 (DC), Anzeigeeinrichtung 10 und Antriebseinheit 14 (M) eingezeichnet; aus Darstellungsgründen sind die Schnittstelleneinrichtung 16 und deren Verbindung zum Gebäudesteuerungssystem 20 nicht gezeigt. Die Antriebseinheit 14 und die Steuereinrichtung 12 sind innerhalb der Schiebetür 4, insbesondere zwischen den Türblättern 26 angeordnet.

Das dargestellte Ausführungsbeispiel des Gebäude-Schiebetürsystems 1 basiert auf einem Prinzip, das ähnlich einem aus EP 28166241 A1 bekannten Prinzip ist. Darin ist ein Schiebetürsystem beschrieben, in dem zwei gegenüberliegende Türflächen mit einem Aktuator gekoppelt sind, der die Türflächen aufeinander zu oder voneinander wegbewegt. Bezogen auf das Gebäude-Schiebetürsystem 1 gemäss der hier beschriebenen Erfindung bedeutet dies, dass die beiden Türblätter 26 in der geschlossenen Position der Schiebetür 4 einen Blattabstand d1 haben. Während des Öffnens der Schiebetür 4 werden die beiden Türblätter 26 durch einen Aktuator 9 (**Fig**. **4A** - **Fig. 4C**) soweit aufeinander zubewegt, dass sie einen Blattabstand d2 haben, der so bemessen ist, dass die Schiebetür 4 in ihrer ganz oder teilweise geöffneten Position (**Fig**. **4B** und **Fig. 4C**) eine so geringe Dicke hat, dass sie in die Aufnahmestruktur des Wandschalenbereichs 2c passt. Der Blattabstand d1 ist dabei grösser als der Blattabstand d2. Wenn die Schiebetür 4 aus dem Wandschalenbereich 2c herausgeschoben ist, werden die beiden Türblätter 26 voneinander wegbewegt (gespreizt), so dass die Schiebetür 4 im geschlossenen Zustand (**Fig. 4A**) eine festgelegte Dicke einnimmt. Die Dicke ist so festgelegte, dass die Außenseiten der beiden Türblätter 26 in der geschlossenen Position mit den Außenseiten des Wandschalenbereichs 2c, bzw. dessen Verkleidung (Wandpaneele 23, 25) im Wesentlichen bündig abschliessen. Dadurch wird auf beiden Wandseiten im Türbereich ein im Wesentlichen glattflächiger Abschluss erreicht.

In einem Ausführungsbeispiel hat das Gebäude-Schiebetürsystem 1 an einem Türquerträger eine Führungseinrichtung, die die Schiebetür 4 trägt und auf ihrem Weg zwischen der geschlossenen Position und der geöffneten Position führt. Die Schiebetür 4 hat dazu an ihrer oberen Kante eine komplementäre Vorrichtung. Die Führungseinrichtung und die komplementäre Vorrichtung wirken zusammen, wenn die Antriebseinheit 14 das Verfahren der Schiebetür 4 veranlasst und beispielsweise auf die komplementäre Vorrichtung einwirkt. Die Führungseinrichtung und die komplementäre Vorrichtung bilden beispielsweise einen Rollenmechanismus (z. B. ein rollengelagertes Schlitten-System (Rollenschlitten)). Die Antriebseinheit 14 kann beispielsweise einen motorischen oder pneumatischen Schiebeantrieb umfassen, der beispielsweise auf die Schiebtür 4 einwirkt. Der Fachmann erkennt, dass die Ausgestaltung nicht auf einen Rollenmechanismus beschränkt ist und dass die Führungseinrichtung und die komplementäre Vorrichtung auf eine andere Art und Weise gestaltet sein können, beispielsweise als Teleskopauszug.

Die beiden Türblätter 26 werden in einem Ausführungsbeispiel durch den Aktuator 9 aufeinander zu oder voneinander wegbewegt. Der Aktuator 9 kann eine Spreizeinrichtung umfassen, die mechanisch, elektrisch oder elektromechanisch aktiviert wird. Die Spreizeinrichtung ist ausgestaltet, die Türblätter 26 aufeinander zuzubewegen, wenn die Schiebetür 4 zu öffnen ist, und diese voneinander wegzubewegen, wenn die Schiebetür 4 zu schliessen ist. Der Fachmann erkennt, dass stattdessen auch andere Spreizeinrichtungen vorgesehen werden können, beispielsweise druckmittelbetätigte Zylinder.

## Patentansprüche

1. Gebäude-Schiebetürsystem (1) zum Abtrennen eines ersten Gebäudebereichs (21) von einem zweiten Gebäudebereich (22), umfassend:
eine Rahmenstruktur (2), die einen Türrahmenbereich (2a), einen Durchgangsbereich (2b) und einen Wandschalenbereich (2c) hat,
eine in der Rahmenstruktur (2) zwischen einer geschlossenen Position und einer geöffneten Position entlang einer Schiebeachse (x) verschiebbare Schiebetür (4), die eine Stirnseite (30) und ein Türblatt (26) hat, wobei der Wandschalenbereich (2c) die Schiebetür (4) in der geöffneten Position zumindest teilweise aufnimmt, wobei die Stirnseite (30) in Richtung des Durchgangsbereichs (2b) zeigt und sich quer zur Schiebeachse (x) erstreckt und wobei sich das Türblatt (26) von der Stirnseite (30) ausgehend im Wesentlichen parallel zur Schiebeachse (x) erstreckt;
eine elektromechanische Antriebseinheit (6) und eine Steuereinrichtung (12), wobei die elektromechanische Antriebseinheit (6) und die Steuereinrichtung (12) ausgestaltet sind, die Schiebetür (4) zu verschieben;
**dadurch gekennzeichnet, dass**
eine elektronische Anzeigeeinrichtung (10) vorhanden ist, die in einem festgelegten Höhenabschnitt an der Schiebetür (4) angeordnet und mit der Steuereinrichtung (12) verbunden ist, wobei die Anzeigeeinrichtung (10) eine Benutzeroberfläche (10a) hat, die sich kantenübergreifend zwischen einem festgelegten Bereich der Stirnseite (30) und einem festgelegten Bereich des Türblatts (26) erstreckt, und
dass die Steuereinrichtung (12) ausgestaltet ist, die Anzeigeeinrichtung (10) zur Informationsanzeige anzusteuern, wobei die Informationsanzeige türblattseitig und/oder stirnseitig erfolgt.

2. Gebäude-Schiebetürsystem (1) nach Anspruch 1, bei dem die Steuereinrichtung (12) ausgestaltet ist, die Anzeigeeinrichtung (10) als Funktion einer ermittelten Position der Schiebetür (4) zur Informationsanzeige anzusteuern, wobei die Informationsanzeige in der geschlossenen Position der Schiebetür (4) türblattseitig, in der geöffneten Position stirnseitig und in einer Zwischenposition türblattseitig und/oder stirnseitig erfolgt.

3. Gebäude-Schiebetürsystem (1) nach Anspruch 1 oder 2, bei dem die elektromechanische Antriebseinheit (6) einen Drehgeber umfasst, der bei einem durch die Antriebseinheit (6) veranlassten Verschieben der Schiebetür (4) eine Winkeländerung detektiert, wobei die Steuereinrichtung (12) ausgestaltet ist, aus der Winkeländerung eine Position der Schiebetür (4), insbesondere eine Distanz (D) zwischen der Stirnseite (30) und dem Türrahmenbereich (2a), zu ermitteln.

4. Gebäude-Schiebetürsystem (1) nach Anspruch 1 oder 2, bei dem eine Sensoreinheit (18) an der Schiebetür (4) angeordnet und mit der Steuereinrichtung (12) verbunden ist, wobei die Sensoreinheit (18) ausgestaltet ist, eine Distanz (D) zwischen der Stirnseite (30) und dem Türrahmenbereich (2a) zu ermitteln, und wobei die Steuereinrichtung (12) ausgestaltet ist, aus der Distanz (D) eine Position der Schiebetür (4) zu ermitteln.

5. Gebäude-Schiebetürsystem (1) nach Anspruch 1, bei dem die Sensoreinheit (18) und die Anzeigeeinrichtung (10) in einer Einheit zusammengefasst sind, insbesondere ist eine Funktionalität der Sensoreinrichtung (18) in der Anzeigeeinrichtung (10) implementiert.

6. Gebäude-Schiebetürsystem (1) nach Anspruch 5, bei dem in der Anzeigeeinrichtung (10) mindestens eine weitere Einrichtung für eine weitere Funktionalität implementiert ist, insbesondere eine Videokamera (10d) für eine Türspion-Funktion und/oder zum Erfassen eines optischen Codes, eine Funkeinheit (10b, 10c) zum Erfassen eines Berechtigungsnachweises und/oder zur Kommunikation mit einem Mobiltelefon eines Nutzers, einen Lautsprecher (10e), einen Näherungssensor (10f) zur Detektion eines sich annähernden Nutzers, und/oder eine LED Beleuchtungseinrichtung (10g) zum Beleuchten der Anzeigeeinrichtung (10) und/oder einer Umgebung der Schiebetür (4).

7. Gebäude-Schiebetürsystem (1) nach einem der vorhergehenden Ansprüche, bei dem die Anzeigeeinrichtung (10) zur Informationsanzeige eine LED-Einheit, eine OLED-Einheit oder eine LCD-Einheit umfasst, wobei diese Einheiten ein Trägermaterial umfassen, das kantenumgreifend ist.

8. Gebäude-Schiebetürsystem (1) nach Anspruch 5, bei dem die Anzeigeeinrichtung (10) als berührungsempfindliche Anzeigeeinrichtung ausgestaltet ist.

9. Gebäude-Schiebetürsystem (1) nach einem der vorhergehenden Ansprüche, bei dem die Anzeigeeinrichtung (10) eine Glas- oder Kunststoffoberfläche hat, die sich über die Benutzeroberfläche (10a) erstreckt, wobei die Glas- oder Kunststoffoberfläche für sichtbares Licht transparent ist.

10. Gebäude-Schiebetürsystem (1) nach einem der vorhergehenden Ansprüche, bei dem die Schiebetür (4) ein inneres Türblatt (26), ein äusseres Türblatt (26), und einen Aktuator (9) hat, der ausgestaltet ist, die zwei Türblätter (26) während einer Öffnungsbewegung der Schiebetür (4) aufeinander zuzubewegen, wobei eine Dicke der Schiebetür (4) reduziert wird, um vom Wandschalenbereich (2c) aufgenommen zu werden, und die beiden Türblätter (26) während einer Schließbewegung voneinander wegzubewegen, wodurch die Dicke der Schiebetür (4) vergrössert wird, wobei die Anzeigeeinrichtung (10) an einem der Türblätter (26) angeordnet ist.

11. Verfahren zum Betreiben eines Gebäude-Schiebetürsystem (1) nach einem der Ansprüche 1 - 10, wobei das Gebäude-Schiebetürsystem (1)
- eine Rahmenstruktur (2),
- eine in der Rahmenstruktur (2) zwischen einer geschlossenen Position und einer geöffneten Position entlang einer Schiebeachse (x) verschiebbare Schiebetür (4), die eine Stirnseite (30) und ein Türblatt (26) hat, wobei ein Wandschalenbereich (2c) der Rahmenstruktur (2) die Schiebetür (4) in der geöffneten Position zumindest teilweise aufnimmt, wobei die Stirnseite (30) in Richtung eines Durchgangsbereichs (2b) zeigt und sich quer zur Schiebeachse (x) erstreckt und wobei sich das Türblatt (26) von der Stirnseite (30) ausgehend im Wesentlichen parallel zur Schiebeachse (x) erstreckt;
- eine elektromechanische Antriebseinheit (6) und eine Steuereinrichtung (12), und
- eine elektronische Anzeigeeinrichtung (10) umfasst, die eine Benutzeroberfläche (10a) hat, die sich kantenübergreifend zwischen einem festgelegten Bereich der Stirnseite (30) und einem festgelegten Bereich des Türblatts (26) erstreckt,
- wobei das Verfahren ein Ansteuern der elektronischen Anzeigeeinrichtung (10) für eine Informationsanzeige durch die Steuereinrichtung (12) umfasst, wobei die Informationsanzeige türblattseitig und/oder stirnseitig erfolgt.

12. Verfahren nach Anspruch 11, ausserdem umfassend Ermitteln einer Position der Schiebetür (4) und Ansteuern der elektronischen Anzeigeeinrichtung (10) zur Informationsanzeige als Funktion der ermittelten Position der Schiebetür (4), wobei die Informationsanzeige in der geschlossenen Position der Schiebetür (4) türblattseitig, in der geöffneten Position stirnseitig und in einer Zwischenposition türblattseitig und/oder stirnseitig erfolgt.

13. Verfahren nach Anspruch 12, wobei zum Ermitteln der Position der Schiebetür (4) ein in der elektromechanischen Antriebseinheit (6) vorhandener Drehgeber verwendet wird, der bei einem durch die Antriebseinheit (6) veranlassten Verschieben der Schiebetür (4) eine Winkeländerung detektiert, wobei die Steuereinrichtung (12) ausgestaltet ist, aus der Winkeländerung die Position der Schiebetür (4), insbesondere eine Distanz (D) zwischen der Stirnseite (30) und dem Türrahmenbereich (2a), zu ermitteln, oder wobei zum Ermitteln der Position der Schiebetür (4) eine an der Schiebetür (4) angeordnete Sensoreinheit (18) verwendet wird, die mit der Steuereinrichtung (12) verbunden ist und eine Distanz (D) zwischen der Stirnseite (30) und dem Türrahmenbereich (2a) ermittelt, um aus der Distanz (D) eine Position der Schiebetür (4) zu ermitteln.

14. Verfahren nach Anspruch 13, wobei die Anzeigeeinrichtung (10) zur Informationsanzeige in einem Fliessmodus angesteuert wird, wenn die Distanz (D) einen festgelegten Schwellenwert erreicht oder überschreitet.

15. Verfahren nach Anspruch 14, wobei bis zum Erreichen des festgelegten Schwellenwerts die Informationsanzeige türblattseitig erfolgt.

## Claims

1. A building sliding door system (1) for separating a first building region (21) from a second building region (22), comprising:
a frame structure (2) which has a door frame region (2a), a passage region (2b), and a wall shell region (2c),
a sliding door (4) which can be moved in the frame structure (2) between a closed position and an open position along a movement axis (x) and has an end face (30) and a door leaf (26), wherein the wall shell region (2c) at least partially receives the sliding door (4) in the open position, wherein the end face (30) points in the direction of the passage region (2b) and extends transversely to the movement axis (x) and wherein the door leaf (26), starting from the end face (30), extends substantially parallel to the movement axis (x);
an electromechanical drive unit (6) and a control device (12), wherein the electromechanical drive unit (6) and the control device (12) are designed to move the sliding door (4);
**characterized in that**
an electronic display device (10) is provided, which is arranged in a fixed vertical section on the sliding door (4) and is connected to the control device (12), wherein the display device (10) has a user interface (10a) which extends over the edges between a fixed region of the end face (30) and a fixed region of the door leaf (26), and
**in that** the control device (12) is designed to control the display device (10) to display information, wherein the information display takes place on the door leaf side and/or on the end face.

2. Building sliding door system (1) according to Claim 1, in which the control device (12) is designed to control the display device (10) as a function of a determined position of the sliding door (4) in order to display information, wherein the information display is on the door leaf side in the closed position of the sliding door (4), on the end face in the open position, and on the door leaf side and/or on the end face in an intermediate position.

3. Building sliding door system (1) according to Claims 1 or 2, in which the electromechanical drive unit (6) comprises a rotary encoder which detects an angle change when the sliding door (4) is moved by the drive unit (6), the control device (12) being designed to determine from the change in angle a position of the sliding door (4), in particular a distance (D) between the end face (30) and the door frame region (2a).

4. Building sliding door system (1) according to Claims 1 or 2, in which a sensor unit (18) is arranged on the sliding door (4) and is connected to the control device (12), wherein the sensor unit (18) is designed to determine a distance (D) between the end face (30) and the door frame region (2a), and wherein the control device (12) is designed to determine from the distance (D) a position of the sliding door (4).

5. Building sliding door system (1) according to Claim 1, in which the sensor unit (18) and the display device (10) are combined in one unit, in particular a functionality of the sensor device (18) is implemented in the display device (10).

6. Building sliding door system (1) according to Claim 5, in which at least one further device is implemented in the display device (10) for a further functionality, in particular a video camera (10d) for a door peephole function and/or for detecting an optical code, a radio unit (10b, 10c) for detecting a proof of authorization and/or for communicating with a mobile telephone of a user, a loudspeaker (10e), a proximity sensor (10f) for detecting an approaching user, and/or an LED lighting device (10g) for illuminating the display device (10) and/or an environment of the sliding door (4).

7. Building sliding door system (1) according to any one of the preceding claims, in which the display device (10) comprises, in order to display information, an LED unit, an OLED unit or an LCD unit, these units comprising a carrier material which extends across the edges.

8. Building sliding door system (1) according to Claim 5, in which the display device (10) is designed as a touch-sensitive display device.

9. Building sliding door system (1) according to any one of the preceding claims, in which the display device (10) has a glass or plastic surface that extends over the user interface (10a), wherein the glass or plastic surface is transparent to visible light.

10. Building sliding door system (1) according to any one of the preceding claims, in which the sliding door (4) has an inner door leaf (26), an outer door leaf (26), and an actuator (9) which is designed to move the two door leaves (26) towards one another during an opening movement of the sliding door (4), wherein a thickness of the sliding door (4) is reduced in order for it to be accommodated by the respective wall shell region (2c), and to move the two door leaves (26) away from one another during a closing movement, thereby increasing the thickness of the sliding door (4), the display device (10) being arranged in one of the door leaves (26).

11. Method for operating a building sliding door system (1) according to any one of Claims 1 to 10, wherein the building sliding door system (1)
- a frame structure (2),
- a sliding door (4) which can be moved in the frame structure (2) between a closed position and an open position along a movement axis (x) and has an end face (30) and a door leaf (26), wherein a wall shell region (2c) of the frame structure (2) at least partially receives the sliding door (4) in the open position, wherein the end face (30) points in the direction of a passage region (2b) and extends transversely to the movement axis (x) and wherein the door leaf (26) extends from the end face (30) substantially parallel to the movement axis (x);
- an electromechanical drive unit (6) and a control device (12), and
- an electronic display device (10) which has a user interface (10a) which extends across the edges between a fixed region of the end face (30) and a fixed region of the door leaf (26),
- wherein the method comprises a controlling of the electronic display device (10) by the control device (12) in order to display information, wherein the information display takes place on the door leaf side and/or on the end face.

12. Method according to Claim 11, further comprising determining a position of the sliding door (4) and activating the electronic display device (10) in order to display information as a function of the determined position of the sliding door (4), wherein the information display is on the door leaf side in the closed position of the sliding door (4), on the end face in the open position, and on the door leaf side and/or on the end face in an intermediate position.

13. Method according to Claim 12, wherein a rotary encoder present in the electromechanical drive unit (6) is used to determine the position of the sliding door (4), said rotary encoder detecting an angle change when the sliding door (4) is moved by the drive unit (6), the control device (12) being designed to determine from the change in angle the position of the sliding door (4), in particular a distance (D) between the end face (30) and the door frame region (2a), or wherein a sensor unit (18) arranged on the sliding door (4) is used to determine the position of the sliding door (4), said sensor unit being connected to the control device (12) and determining a distance (D) between the end face (30) and the door frame region (2a) in order to determine from the distance (D) a position of the sliding door (4).

14. Method according to Claim 13, wherein the display device (10) is actuated in order to display information in a flow mode when the distance (D) reaches or exceeds a defined threshold value.

15. Method according to Claim 14, wherein the information display takes place on the door leaf side until the defined threshold value is reached.

## Revendications

1. Système de porte coulissante de bâtiment (1) permettant de séparer une première zone de bâtiment (21) d'une seconde zone de bâtiment (22), comprenant :
une structure de cadre (2) qui présente une zone de cadre de porte (2a), une zone de passage (2b) et une zone de coque de paroi (2c),
une porte coulissante (4) pouvant être déplacée dans la structure de cadre (2) entre une position fermée et une position ouverte le long d'un axe de coulissement (x), laquelle porte coulissante présente une face frontale (30) et un vantail de porte (26), dans lequel la zone de coque de paroi (2c) reçoit au moins partiellement la porte coulissante (4) dans la position ouverte, dans lequel la face frontale (30) est orientée en direction de la zone de passage (2b) et s'étend transversalement à l'axe de coulissement (x), et dans lequel le vantail de porte (26) s'étend, à partir de la face frontale (30), sensiblement parallèlement à l'axe de coulissement (x) ;
une unité d'entraînement (6) électromécanique et un dispositif de commande (12), dans lequel l'unité d'entraînement (6) électromécanique et le dispositif de commande (12) sont conçus pour déplacer la porte coulissante (4) ;
**caractérisé en ce**
**qu'**il existe un dispositif d'affichage (10) électronique qui est disposé sur la porte coulissante (4) à une section verticale définie et qui est relié au dispositif de commande (12), dans lequel le dispositif d'affichage (10) présente une interface utilisateur (10a) qui s'étend entre une zone définie de la face frontale (30) et une zone définie du vantail de porte (26) en recouvrant leurs arêtes, et
**en ce que** le dispositif de commande (12) est conçu pour commander le dispositif d'affichage (10) pour l'affichage d'informations, dans lequel l'affichage d'informations se fait du côté vantail de porte et/ou du côté frontal.

2. Système de porte coulissante de bâtiment (1) selon la revendication 1, dans lequel le dispositif de commande (12) est conçu pour commander le dispositif d'affichage (10) en fonction d'une position déterminée de la porte coulissante (4) pour l'affichage d'informations, dans lequel l'affichage d'informations se fait du côté vantail de porte dans la position fermée de la porte coulissante (4), du côté frontal dans la position ouverte et du côté vantail de porte et/ou du côté frontal dans une position intermédiaire.

3. Système de porte coulissante de bâtiment (1) selon la revendication 1 ou 2, dans lequel l'unité d'entraînement (6) électromécanique comprend un capteur rotatif qui détecte une variation angulaire lors d'un déplacement de la porte coulissante (4) provoqué par l'unité d'entraînement (6), dans lequel le dispositif de commande (12) est conçu pour déterminer, à partir de la variation angulaire, une position de la porte coulissante (4), en particulier une distance (D) entre la face frontale (30) et la zone de cadre de porte (2a).

4. Système de porte coulissante de bâtiment (1) selon la revendication 1 ou 2, dans lequel une unité de capteur (18) est disposée sur la porte coulissante (4) et est reliée au dispositif de commande (12), dans lequel l'unité de capteur (18) est conçue pour déterminer une distance (D) entre la face frontale (30) et la zone de cadre de porte (2a), et dans lequel le dispositif de commande (12) est conçu pour déterminer une position de la porte coulissante (4) à partir de la distance (D).

5. Système de porte coulissante de bâtiment (1) selon la revendication 1, dans lequel l'unité de capteur (18) et le dispositif d'affichage (10) sont réunis en une unité, une fonctionnalité du dispositif de capteur (18) étant en particulier mise en œuvre dans le dispositif d'affichage (10).

6. Système de porte coulissante de bâtiment (1) selon la revendication 5, dans lequel au moins un autre dispositif est mis en œuvre dans le dispositif d'affichage (10) pour une autre fonctionnalité, en particulier une caméra vidéo (10d) pour une fonction de judas et/ou pour la lecture d'un code optique, une unité radio (10b, 10c) pour la lecture d'un justificatif d'identité et/ou pour la communication avec un téléphone mobile d'un utilisateur, un haut-parleur (10e), un capteur de proximité (10f) pour la détection d'un utilisateur qui s'approche, et/ou un dispositif d'éclairage à DEL (10g) pour l'éclairage du dispositif d'affichage (10) et/ou d'un environnement de la porte coulissante (4).

7. Système de porte coulissante de bâtiment (1) selon l'une des revendications précédentes, dans lequel le dispositif d'affichage (10) pour l'affichage d'informations comprend une unité à DEL, une unité à DELO ou une unité LCD, dans lequel ces unités comprennent un matériau de support qui recouvre les arêtes.

8. Système de porte coulissante de bâtiment (1) selon la revendication 5, dans lequel le dispositif d'affichage (10) est conçu comme un dispositif d'affichage tactile.

9. Système de porte coulissante de bâtiment (1) selon l'une des revendications précédentes, dans lequel le dispositif d'affichage (10) présente une surface en verre ou en plastique qui s'étend sur l'interface utilisateur (10a), dans lequel la surface en verre ou en plastique est transparente à la lumière visible.

10. Système de porte coulissante de bâtiment (1) selon l'une des revendications précédentes, dans lequel la porte coulissante (4) présente un vantail de porte (26) intérieur, un vantail de porte (26) extérieur, et un actionneur (9) conçu pour rapprocher les deux vantaux de porte (26) l'un de l'autre pendant un mouvement d'ouverture de la porte coulissante (4), dans lequel une épaisseur de la porte coulissante (4) est réduite pour être reçue par la zone de coque de paroi (2c), et pour éloigner les deux vantaux de porte (26) l'un de l'autre pendant un mouvement de fermeture, moyennant quoi l'épaisseur de la porte coulissante (4) est augmentée, dans lequel le dispositif d'affichage (10) est disposé sur l'un des vantaux de porte (26).

11. Procédé pour le fonctionnement d'un système de porte coulissante de bâtiment (1) selon l'une des revendications 1 à 10, dans lequel le système de porte coulissante de bâtiment (1) comprend
- une structure de cadre (2),
- une porte coulissante (4) pouvant être déplacée dans la structure de cadre (2) entre une position fermée et une position ouverte le long d'un axe de coulissement (x), laquelle porte coulissante présente une face frontale (30) et un vantail de porte (26), dans lequel une zone de coque de paroi (2c) de la structure de cadre (2) reçoit au moins partiellement la porte coulissante (4) dans la position ouverte, dans lequel la face frontale (30) est orientée en direction d'une zone de passage (2b) et s'étend transversalement à l'axe de coulissement (x), et dans lequel le vantail de porte (26) s'étend, à partir de la face frontale (30), sensiblement parallèlement à l'axe de coulissement (x) ;
- une unité d'entraînement (6) électromécanique et un dispositif de commande (12), et
- un dispositif d'affichage (10) électronique présentant une interface utilisateur (10a) qui s'étend entre une zone définie de la face frontale (30) et une zone définie du vantail de porte (26) en recouvrant leurs arêtes,
- dans lequel le procédé comprend une commande du dispositif d'affichage (10) électronique pour un affichage d'informations par le dispositif de commande (12), dans lequel l'affichage d'informations se fait du côté vantail de porte et/ou du côté frontal.

12. Procédé selon la revendication 11, comprenant en outre la détermination d'une position de la porte coulissante (4) et la commande du dispositif d'affichage (10) électronique pour l'affichage d'informations en fonction de la position déterminée de la porte coulissante (4), dans lequel l'affichage d'informations se fait du côté vantail de porte dans la position fermée de la porte coulissante (4), du côté frontal dans la position ouverte et du côté vantail de porte et/ou du côté frontal dans une position intermédiaire.

13. Procédé selon la revendication 12, dans lequel, pour la détermination de la position de la porte coulissante (4), un capteur rotatif présent dans l'unité d'entraînement (6) électromécanique est utilisé, lequel capteur rotatif détecte une variation angulaire lors d'un déplacement de la porte coulissante (4) provoqué par l'unité d'entraînement (6), dans lequel le dispositif de commande (12) est conçu pour déterminer, à partir de la variation angulaire, la position de la porte coulissante (4), en particulier une distance (D) entre la face frontale (30) et la zone de cadre de porte (2a), ou dans lequel, pour la détermination la position de la porte coulissante (4), une unité de capteur (18) disposée sur la porte coulissante (4) est utilisée, laquelle unité de capteur est reliée au dispositif de commande (12) et détermine une distance (D) entre la face frontale (30) et la zone de cadre de porte (2a), afin de déterminer une position de la porte coulissante (4) à partir de la distance (D).

14. Procédé selon la revendication 13, dans lequel le dispositif d'affichage (10) pour l'affichage d'informations est commandé dans un mode continu lorsque la distance (D) atteint ou dépasse une valeur seuil définie.

15. Procédé selon la revendication 14, dans lequel, jusqu'à ce que la valeur seuil définie soit atteinte, l'affichage d'informations se fait du côté vantail de porte.
